(19) Europäisches Patentamt
European Patent Office
Office européen des brevets

(11) **EP 0 604 475 B1**

(12) **EUROPÄISCHE PATENTSCHRIFT**

(45) Veröffentlichungstag und Bekanntmachung des Hinweises auf die Patenterteilung:
**05.06.1996 Patentblatt 1996/23**

(51) Int. Cl.$^6$: **B60G 11/26**, B60G 3/01, B60K 17/14

(21) Anmeldenummer: **92918594.0**

(22) Anmeldetag: **02.09.1992**

(86) Internationale Anmeldenummer:
**PCT/EP92/02024**

(87) Internationale Veröffentlichungsnummer:
**WO 93/05969 (01.04.1993 Gazette 1993/09)**

(54) **FEDERBEIN FÜR HYDRAULISCHEN RADANTRIEB**

SHOCK-ABSORBING STRUT FOR A HYDRAULIC WHEEL-DRIVE UNIT

JAMBE DE SUSPENSION POUR COMMANDE HYDRAULIQUE DES ROUES

(84) Benannte Vertragsstaaten:
**DE ES FR GB IT**

(30) Priorität: **21.09.1991 DE 4131545**

(43) Veröffentlichungstag der Anmeldung:
**06.07.1994 Patentblatt 1994/27**

(73) Patentinhaber: **KIDDE INDUSTRIES INC.**
**Iselin, New Jersey 08830 (US)**

(72) Erfinder: **ZIMMERMANN, Horst**
**A-6700 Bludenz (AT)**

(74) Vertreter: **Schwabe - Sandmair - Marx**
**Patentanwälte**
**P.O. Box 860245**
**D-81629 München (DE)**

(56) Entgegenhaltungen:
**EP-A- 0 331 101**     **EP-A- 0 332 020**
**DE-A- 3 743 203**     **GB-A- 2 224 983**
**US-A- 3 008 424**

## Beschreibung

Die Erfindung betrifft ein Federbein mit einem an dem Rahmen eines Fahrzeugs befestigten äußeren Führungsgehäuse, einem in diesem axial gleitbaren und rotierbaren Stützelement zur Aufnahme eines Radträgers mit hydraulischem Radantrieb, mindestens einem Druckraum, der von dem Führungsgehäuse und dem Stützelement und/oder fest mit diesen verbundenen Teilen gebildet ist, zur Abstützung des Rahmens gegenüber dem Rad oder einer Radgruppe und einer Ölversorgung mit je einer Ölzuführung und Ölrückführung für den hydraulischen Radantrieb.

Ein gattungsgemäßes Federbein ist aus der AT-PS 330 555 bekannt. Das Stützelement kann sich dabei statt auf einem einzelnen Rad auch auf einer Gruppe von Rädern abstützen, wie dies aus der US-PS 4 220 352 bekannt ist.

Es ist weiterhin bekannt, den hydraulischen Antriebsmotor von an lenkbaren Schwingen aufgehängten und über Hydraulikzylinder gegen den Rahmen abgestützten Rädern oder Radsätzen durch außerhalb der genannten Teile verlaufende flexible Schlauchleitungen mit Drucköl zu versorgen. Bei einer solchen Anordnung besteht aber, insbesondere bei beengten Platzverhältnissen, wie sie bei Schwerfahrzeugen, insbesondere Fahrzeugkranen gegeben sind, der Nachteil der Verletzungsgefahr und einer begrenzten Lebensdauer der Schläuche.

Der Erfindung liegt die Aufgabe zugrunde, ein Federbein der gattungsgemäßen Art anzugeben, bei dem die genannten Nachteile vermieden werden und die Ölversorgung für den hydraulischen Antrieb sicher, zuverlässig und langlebig sein soll.

Diese Aufgabe wird erfindungsgemäß dadurch gelöst, daß die Ölzuführung und die Ölrückführung durch das Federbein verlaufen, daß die Ölzuführung und die Ölrückführung je eine achsparallel zur Federbeinachse verlaufende teleskopierbare, abgedichtete Leitungsverbindung aufweisen, wobei eine Leitung jeder Leitungsverbindung fest mit dem Führungsgehäuse verbunden ist, daß die gegenüber dem Führungsgehäuse axial bewegbaren teleskopierbaren Leitungen an einer mit dem Stützelement axial unverschiebbar verbundenen Drehverbindung befestigt sind, daß sich das von dem Führungsgehäuse wegweisende Ende der Ölzuführung und der Ölrückführung in dem auch rotatorisch fest mit dem Stützelement verbundenen Außenteil der Drehverbindung befindet und daß die teleskopierbaren Leitungsverbindungen jeweils mit einem Ausgleichszylinder verbunden sind, in dem der hydraulische Druck des für den Antrieb vorgesehenen Hydrauliköls eine Kraft auf die Drehverbindung ausübt, die der in der teleskopierbaren Leitungsverbindung ausgeübten Kraft entspricht, aber entgegengerichtet ist.

Die Durchführung der Ölzu- und -rückführung durch das stabil ausgebildete Federbein schließt eine Verletzung durch Einflüsse von außen aus. Innerhalb des Federbeins ist je eine axial anpaßbare teleskopierbare Leitungsverbindung und eine Drehverbindung vorgesehen. Durch diese beiden Leitungsverbindungen ist einmal ein - in bezug auf den Rahmen - fester Anschluß am Federbein und zum anderen ein - in bezug auf den Fuß des Stützelements und damit in bezug auf einen hydraulischen Radantrieb - ebenfalls ein fester Anschluß gegeben. Damit die bei teleskopierbaren Verbindungen immer vorhandenen wirksamen Stirnflächen beim Vorhandensein eines hydraulischen Drucks für den Antrieb keinen Einfluß auf die Abstützung des Federbeins haben, sind die teleskopierbaren Leitungsverbindungen jeweils mit einem Zylinder verbunden, in dem der hydraulische Druck eine Kraft auf die Drehverbindung und damit auf das Stützelement und das Rad bzw.die Radgruppe ausübt, die der in der teleskopierbaren Leitungsverbindung ausgeübten Kraft entspricht, aber entgegengerichtet ist. Insgesamt ist der Einfluß des hydraulischen Drucks für den Antrieb in bezug auf die Abstützung also Null.

Vorteilhafte Weiterbildungen der Erfindung sind in den Unteransprüchen beschrieben. So weist der Ausgleichszylinder vorzugsweise ein gegenüber dem Führungsgehäuse unbeweglich angeordnetes Zylindergehäuse und einen Kolben auf, der über seine Kolbenstange mit der Drehverbindung verbunden ist. Dabei ist die der Drehverbindung zugewandte Zylinderkammer des Ausgleichszylinders hydraulisch mit der jeweils zugeordneten teleskopierbaren Leitungsverbindung verbunden. Um die entgegengesetzten Krafteinwirkungen des hydraulischen Drucks gleich groß zu machen, ist die Differenz zwischen dem Quadrat des Innendurchmessers des Ausgleichszylinders und dem Quadrat des Durchmessers der Kolbenstange gleich dem Quadrat des größten Innendurchmessers der teleskopierbaren Leitungsverbindung.

Die hydraulische Verbindung zwischen der teleskopierbaren Leitungsverbindung und dem Ausgleichszylinder erfolgt vorzugsweise durch einen in dem oberen Deckel der Drehverbindung angeordneten Kanal und die Kolbenstange des Ausgleichszylinders. Mit der Umfangsfläche des oberen Deckels ist keinerlei Funktion verbunden, so daß diese zum Herstellen eines entsprechenden Kanals ohne weiteres herangezogen werden kann.

Die zur Drehverbindung hinweisende Leitung der teleskopierbaren Leitungsverbindung und die Kolbenstange des Druckausgleichszylinders sind zusammen mit dem oberen Deckel der Drehverbindung gegenüber dem Führungsgehäuse rotatorisch unbeweglich. Damit diese Teile insbesondere im Falle einer Lenkung des Rades bzw. einer Radgruppe frei von quergerichteten Kräften sind, ist vorgesehen, den oberen Deckel und das Innenteil der Drehverbindung über eine Drehmomentenstütze gegenüber dem Führungsgehäuse rotatorisch unbeweglich zu halten. Dabei weist die Drehmomentenstütze vorzugsweise eine Zahnwellen-Verbindung auf, wobei das Zahnwellen-Profil und das Zahnnaben-Profil von einem mit dem Führungsgehäuse und einem mit der Drehverbindung befestigten Teil gebildet wird. Als gleichwertig mit einer Zahnwellen-Verbindung sind Keilwellen- und Kerbzahnwellen-Verbindungen anzusehen.

Die hydraulische Verbindung zwischen der teleskopierbaren Leitungsverbindung und dem von dem Führungsgehäuse wegweisenden Ende der Ölzuführung bzw. der Ölrückführung erfolgt vorzugsweise durch je ein Durchgangsloch im oberen Deckel, ein Sackloch und einen radialen Durchlaß im Innenteil der Drehverbindung, eine ringförmige Nut im Innenteil oder im Außenteil der Drehverbindung, einen radialen Durchlaß und ein axiales Sackloch im Außenteil der Drehverbindung.

Ein Ausführungsbeispiel der Erfindung ist in der Zeichnung dargestellt und wird im folgenden näher erläutert. Es zeigen:

Fig. 1    ein Federbein in einem Längsschnitt längs der Linie I-I in Fig. 2,

Fig. 2    das Federbein in einem Querschnitt längs der Linie II-II in Fig. 1 und

Fig. 3    das Federbein in einem auszugsweisen Längsschnitt längs der Linie III-III in Fig. 2 in vergrößertem Maßstab.

Das Federbein 1 weist ein Außenrohr oder Führungsgehäuse 2 auf, das mit einem (nicht dargestellten) Chassis bzw. Rahmen eines Fahrzeugs fest verbunden ist. In dem Außenrohr 2 ist ein Führungsrohr oder Stützelement 3 beweglich gelagert, und zwar sowohl in Richtung der Federbeinachse 4 längsverschiebbar als auch um einen Winkel bis maximal 90° um die Achse 4 schwenkbar.

Die Schwenkbarkeit des Führungsrohrs 3 wird durch eine Lenkung bewirkt, wie sie beispielsweise in der EP-A2-0 332 020 beschrieben ist. An seinem unteren, aus dem Außenrohr 2 herausragenden Ende weist das Führungsrohr 3 einen Flansch 5 mit Löchern 6 auf. An diesem Flansch 6 ist ein Radträger angeschraubt, wie dies ebenfalls in der EP-A2-0 332 020 offenbart ist. In dem Radträger bzw. der von diesem getragenen Radnabe ist ein hydraulischer Motor eingebaut, wie er beispielsweise in der DE-OS 26 23 757 als Einzelradantrieb offenbart ist.

Die von dem Rad auf das Federbein 1 senkrecht zur Federbeinachse 4 wirkenden Kräfte werden von dem Führungsrohr 3 über Gleitringe 7, 8 auf das Außenrohr 2 übertragen. Jeweils unterhalb der Gleitringe 7, 8 sind Dichtringe 9 bzw. 10 angeordnet.

Das Federbein 1 weist ferner eine Drehdurchführung oder Drehverbindung 11 auf. Diese besteht aus einem rohrförmigen Außenteil 12, einem gegenüber diesem drehbaren zylindrischen Innenteil 13, einem unteren Deckel 14, der mit Schrauben 15 fest mit dem Innenteil 13 verbunden ist, sowie einem oberen Deckel 16, der mit Schrauben 17 ebenfalls fest mit dem Innenteil 13 verbunden ist. Der Außendurchmesser beider Deckel 14, 16 ist größer als der Innendurchmesser des Außenteils 12. Das Innenteil 13 bleibt somit gegenüber dem Außenteil 12 zwar drehbar, in axialer Richtung, d.h. in Richtung der Federbeinachse 4 ist das Innenteil 13 gegenüber dem Außenteil 12 durch die Deckel 14, 16 jedoch unverschieblich.

Das Außenteil 12 weist oben und unten an seiner Innenwand Gleitringe 18, 19 auf. Zwischen den Gleitringen 18, 19 sind an der Innenwand untereinander ringförmige Nuten 21 bis 25 eingelassen. Zwischen diesen Nuten und zwischen den beiden äußeren Nuten 21, 25 und den Gleitringen 18, 19 ist jeweils ein Dichtring 26 angeordnet.

Das Außenteil 12 ist von unten in das Führungsrohr 3 eingeschoben und sowohl gegen Verdrehen als auch gegen ein Verschieben in Längsrichtung gegenüber diesem durch Stifte 27 gesichert.

Das Federbein 1 wird nach oben durch einen Deckel 28 abgeschlossen, der durch Schrauben 29 fest mit dem Außenrohr 2 verbunden ist. An dem Deckel 28 ist außerdem eine als dickwandiges Rohr ausgebildete hohle Kolbenstange 30 mittels Schrauben 31 fest verbunden. Die Kolbenstange 30 weist an ihrem unteren Ende einen einen Kolben 32 bildenden ringförmigen Ansatz auf, in den eine Dichtung 33 eingelassen ist.

Am oberen Ende des Führungsrohrs 3 befindet sich eine beispielsweise durch Einschrauben mit diesem fest verbundene Führungsbuchse 34, die eine Dichtung 35 aufweist.

Die von dem Deckel 28, dem Außenrohr 2, der Kolbenstange 30, dem oberen Ende des Führungsrohres 3 und der Führungsbuchse 34 begrenzte Ringkammer 36 bildet die Hauptdruckkammer des Federbeins 1 in bezug auf die Abstützung des Fahrzeugs auf dem Rad. Sie ist über einen Anschluß 37 und eine Drosselanordnung zur Schwingungsdämpfung mit einem an einer Druckquelle angeschlossenen Druckspeicher verbunden, wie dies beispielsweise in der EP-A2-0 331 101 offenbart ist. Dabei wird die für die Abstützkraft der hydropneumatischen Federung maßgeblich aktive Kolbenfläche aus den Stirnflächen des Führungsrohrs 3 und der Führungsbuchse 34 gebildet.

Die durch das Führungsrohr 3, die Kolbenstange 30 und den Kolben 32 und die Führungsbuchse 34 begrenzte Ringkammer 38 ist ebenfalls Bestandteil der hydropneumatischen Federung. In diese Ringkammer mündet eine in der Kolbenstange 30 axial verlaufende und kurz vor dem Kolben 32 nach außen tretende Leitung 39. Über diese Leitung kann die Ringkammer 38 z.B. zum Anheben des Rades mit einer beliebigen Druckquelle oder zum Fixieren der Höhenlage des Rades gegenüber dem Chassis unmittelbar, d.h. unter Abschalten des Hydrospeichers mit der Ringkammer 36 verbunden sein (durch die unterschiedlichen Querschnittsflächen findet ein Druckölausgleich nicht statt).

Die hohle Kolbenstange 30 weist am unteren Ende ihrer Innenwandung ein Zahnnaben-Profil 41 auf, das mit dem Zahnwellen-Profil 42 einer im übrigen rohrförmigen Momentenstütze 43 in Eingriff steht. Die Momentenstütze 43 ist mit einem an ihrem unteren Ende befindlichen Flansch 45 mit Hilfe der Schrauben 17 mit dem Deckel 16 und dem Innenteil 13 der Drehverbindung 11 fest verbunden und stellt so sicher, daß der obere Deckel 16, das Innenteil 13 und der untere Deckel 14 als Untereinheit der Drehverbindung 11 keine Drehbewegung gegenüber der Kolbenstange 30 und dem Außenrohr 2 ausführen können.

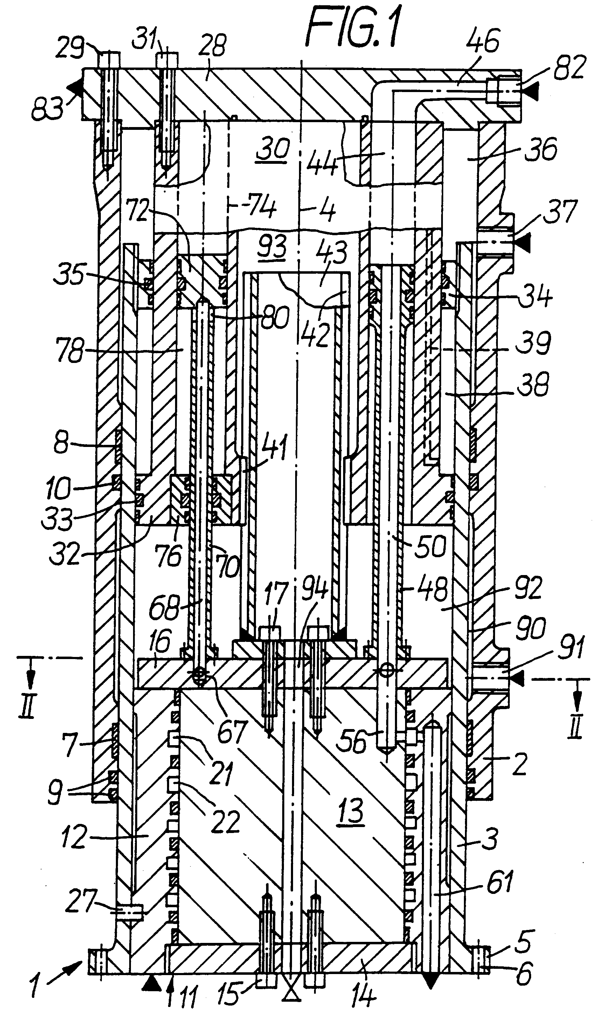

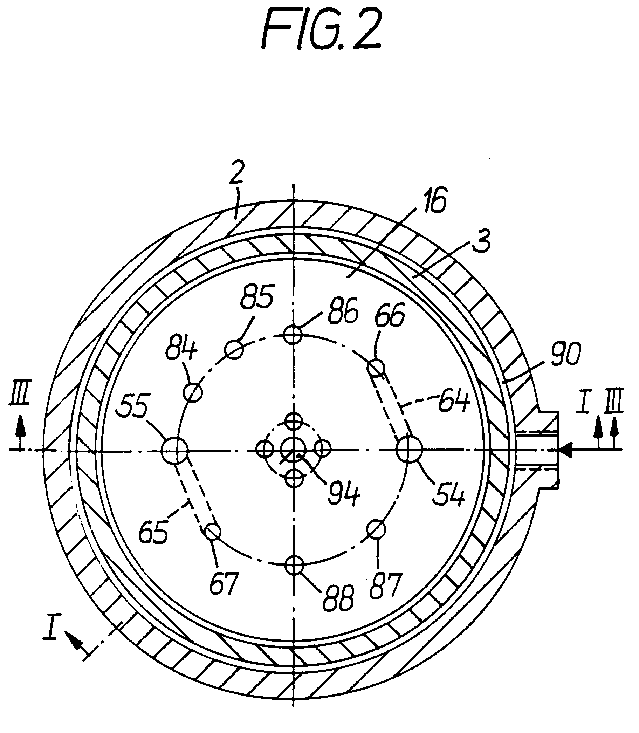

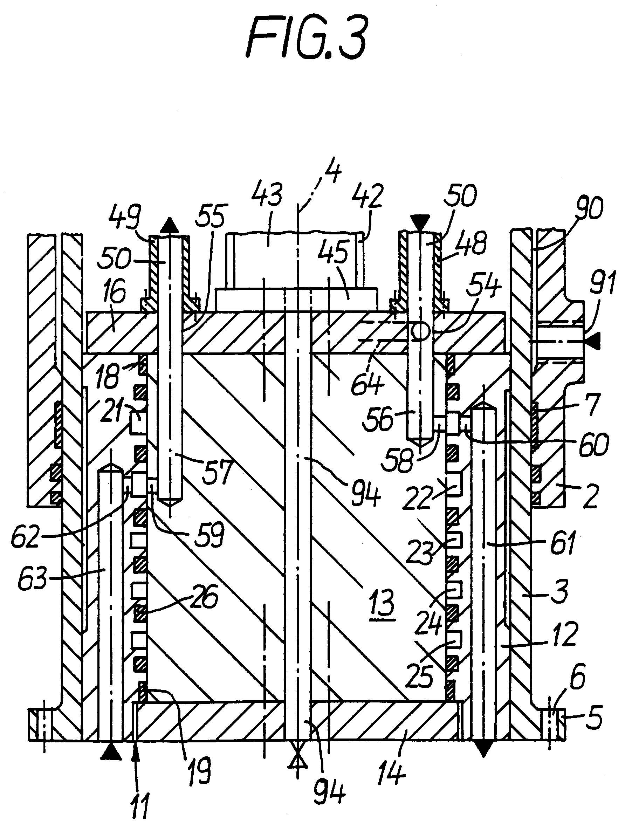

In die Kolbenstange 30 sind zwei diametral gegenüber angeordnete Bohrungen 44 eingebracht (von denen in Fig. 1 wegen der Schnittführung I-I in Fig. 2 nur eine sichtbar ist). Beide Bohrungen 44 stehen mit Kanälen 46 im Deckel 28 in Verbindung. In diese Bohrungen 44 ragen Kolbenstangen 48 und (vgl. Fig. 3) 49 mit Innenbohrungen 50 hinein, deren obere Enden als Ringkolben 51 mit Dichtungen ausgebildet sind. Die Kolbenstangen 48, 49 sind beispielsweise mit Schrauben an dem oberen Deckel 16 befestigt.

An der Stelle, an der die Kolbenstangen 48, 49 befestigt sind, weist der Deckel 16 Durchgangsbohrungen 54, 55 und das Innenteil 13 der Drehverbindung 11 entsprechende Sackbohrungen 56, 57 auf. Die eine der Sackbohrungen (56) ist in Höhe der Innennut 21 mit einem nach außen mündenden Kanal 58 verbunden. Die weitere, in bezug auf die Federbeinachse 4 diametral gegenüberliegende Sackbohrung 57 ist in Höhe der Innennut 22 in gleicher Weise mit einem nach außen mündenden Kanal 59 verbunden.

Die Innennut 21 ist über einen Durchlaß 60 mit einem im Außenteil 12 der Drehverbindung 11 parallel zur Federbeinachse 4 verlaufenden, nach unten offen Kanal 61 verbunden. Die Innennut 22 ist über einen Durchlaß 62 mit einem entsprechenden Kanal 63 im Außenteil 12 verbunden.

Die Durchgangsbohrungen 54, 55 sind jeweils über einen Kanal 64, 65 mit einer auf demselben Umfang liegenden nach oben offenen Sackbohrung 66, 67 verbunden. An der Stelle dieser Bohrungen ist jeweils eine mit einer Innenbohrung 68 versehene hohle Kolbenstange 70 beispielsweise mittels Schrauben fest mit dem Deckel 16 verbunden. Das obere als Kolben 72 mit Dichtungen ausgebildete Ende der Kolbenstangen 70 läuft jeweils in einer zylindrischen Bohrung 74 der Kolbenstangen 30.

Die Bohrungen 74 sind in Höhe des Kolbens 32 nach unten durch Führungsbuchsen 76 abgeschlossen. Die Führungsbuchsen 76 sind z.B. durch Einschrauben in der Kolbenstange 30 befestigt und weisen an ihrer Innenwand, in die Kolbenstangen 70 gleitbar geführt sind, Dichtungen auf. Durch die Bohrungen 74, die Kolben 72, die Führungsbuchsen 76 und die Kolbenstangen 70 sind jeweils eine Zylinderkammer 78 eines Druckausgleichszylinders gebildet, die durch Bohrungen 80 in der Kolbenstange 70, die Innenbohrung 68, die Bohrung 66 bzw. 67, den Kanal 64 bzw. 65 und die Bohrung 54 bzw. 55 einerseits mit der Innenbohrung 50 der Kolbenstangen 48 bzw. 49 und andererseits mit der Bohrung 61 bzw. 63 im Außenteil 12 verbunden ist.

Die Abmessungen der Bohrungen 44 und 74 und der Kolbenstangen 70 sind dabei derart, daß

$$d_{44}{}^2 = d_{74}{}^2 - d_{70}{}^2$$

wobei

d44 = Innendurchmesser der Bohrungen 44
d74 = Innendurchmesser der Bohrungen 74
d70 = Außendurchmesser der Kolbenstangen 70.

Die durch den Innendurchmesser der Bohrungen 44 bestimmte Fläche ist somit genauso groß wie die wirksame Querschnittsfläche der Kammern 78.

Ein in der Bohrung 44 herrschender hydraulischer Druck übt auf die Drehverbindung 11 und damit auch auf das Führungsrohr 3 eine vom Deckel 28 wegweisende Kraft aus. Derselbe Druck in der Kammer 78 des Ausgleichszylinders übt auf die Drehverbindung 11 über den Kolben 72 und die Kolbenstange 68 wegen der gleichen wirksamen Kolbenflächen eine gleichgroße, aber entgegengesetzte Kraft in Richtung zum Deckel 28 hin auf die Drehverbindung 11 aus. Der Druck des zum Antrieb des Hydromotors vorgesehenen Drucköls hat also keinen Einfluß auf die Wirkung des Federbeins 1 als federndes Abstützelement.

Umgekehrt wird bei einem Einfedern des Federbeins Drucköl desselben Drucks in der größer werdenden Kammer 78 aufgenommen, während gleichzeitig Drucköl aus der kleiner werdenden Bohrung entweicht.

In dem Federbein 1 sind somit zwei völlig voneinander getrennte und sich nicht gegenseitig beeinflussende hydraulische Systeme zum federnden Abstützen und zur Versorgung des Antriebsorgans untergebracht.

Das für den Antrieb des Hydromotors notwendige Hydrauliköl wird dem Federbein 1 über einen Anschluß 82 im Deckel 28 zugeführt. Der Zufluß des Hydrauliköls durch das Federbein zum Hydraulikmotor erfolgt durch den Kanal 46 im Deckel 28, die Bohrung 44 in der Kolbenstange 30, die Innenbohrung 50 in der Kolbenstange 48, die Bohrung 54 im Deckel 16 (bei gleichzeitigem Druckbeaufschlagen der Kammer 78 des Ausgleichszylinders durch den Kanal 64), die Bohrung 56 und den Kanal 58 im Innenteil 13, die Ringnut 21, den Durchlaß 60 und die Bohrung 61 im Außenteil 12. - Der Rückfluß des Hydrauliköls vom Hydraulikmotor erfolgt entsprechend durch die Bohrung 63 und den Durchlaß 62, die Ringnut 22, den Kanal 59 und die Bohrung 57, die Durchgangsbohrung 55 (bei gleichzeitiger Druckbeaufschlagung der Kammer 78 des anderen Ausgleichszylinders durch den Kanal 65 und die Bohrung 67 im Deckel 16), die Kolbenstange 49, eine der in Fig. 1 sichtbaren Bohrung 44 entsprechende Bohrung und einen dem dargestellten Kanal 46 entsprechenden Kanal zum Auslaß 83.

In Fig. 2 sind im Deckel 16 weitere Bohrungen 84 bis 88 für Steueröl, Lecköl sowie Luft angedeutet. Diese sind Bestandteile von Leitungssystemen, die, wie die Bohrungen 44 - jedoch ohne den beschriebenen Druckausgleich - über eine der Ringnuten 23 bis 25 mit einer der Bohrungen 61 vergleichbaren Bohrung verbunden sind.

Eine in dem Außenrohr 2 vorgesehene Schmierkammer 90 wird über zumindest einen Anschluß 91 mit Schmieröl versorgt.

Die nicht weiter beschriebenen Innenräume 92 und 93 um die Momentenstütze 43 und innerhalb der Kolbenstange 30 stehen über die durch die gesamte Drehverbindung 11 reichende zentrische Bohrung 94 mit der Außenluft in Verbindung.

**Patentansprüche**

1. Federbein (1) mit
einem an dem Rahmen eines Fahrzeugs befestigten äußeren Führungsgehäuse (2),
einem in diesem axial gleitbaren und rotierbaren Stützelement (3) zur Aufnahme eines Radträgers mit hydraulischem Radantrieb,
mindestens einem Druckraum, der von dem Führungsgehäuse (2) und dem Stützelement (3) und/oder fest mit diesen verbundenen Teilen gebildet ist, zur Abstützung des Rahmens gegenüber dem Rad oder einer Radgruppe,
und einer Ölversorgung mit je einer Ölzuführung und einer Ölrückführung für den hydraulischen Antrieb, **dadurch gekennzeichnet**,
daß die Ölzuführung (82, 46, 44, 50, 54, 56, 58, 21, 60, 61) und die Ölrückführung (63, 62, 22, 59, 57, 55, 49, 83) durch das Federbein (1) verlaufen,
daß die Ölzuführung (82 usw.) und die Ölrückführung (63 usw.) je eine achsparallel zur Federbeinachse (4) verlaufende teleskopierbare, abgedichtete Leitungsverbindung (44/48/50, .../49/...) aufweisen, wobei eine Leitung (44) jeder Leitungsverbindung fest mit dem Führungsgehäuse (28, 2) verbunden ist,
daß die gegenüber dem Führungsgehäuse (2) axial bewegbaren teleskopierbaren Leitungen (50/48, 50/49) an einer mit dem Stützelement (3) axial unverschiebbar verbundenen Drehverbindung (11) befestigt sind,
daß sich das von dem Führungsgehäuse (2) wegweisende Ende der Ölzuführung (82 usw.) und der Ölrückführung (63 usw.) in dem auch rotatorisch fest mit dem Stützelement (3) verbundenen Außenteil (12) der Drehverbindung (11) befindet,
und daß die teleskopierbaren Leitungsverbindungen (44/48/50, .../49/...) jeweils mit einem Ausgleichszylinder (28, 74, 76) verbunden sind, in dem der hydraulische Druck des für den Antrieb vorgesehenen Hydrauliköls eine Kraft auf die Drehverbindung (11) ausübt, die der in der teleskopierbaren Leitungsverbindung (44 usw.) ausgeübten Kraft entspricht, aber entgegengerichtet ist.

2. Federbein nach Anspruch 1, dadurch gekennzeichnet, daß der Ausgleichszylinder (28, 74, 76) ein gegenüber dem Führungsgehäuse (2) unbeweglich angeordnetes Zylindergehäuse (74) und einen Kolben (72) aufweist,
der über seine Kolbenstange (70) mit der Drehverbindung (11) verbunden ist,
wobei die der Drehverbindung (11) zugewandte Zylinderkammer (78) hydraulisch mit der jeweils zugeordneten teleskopierbaren Leitungsverbindung (44 usw.) verbunden ist,
und daß die Differenz zwischen dem Quadrat des Innendurchmessers ($d_{74}$) des Zylinders (74) und dem Quadrat des Durchmessers ($d_{70}$) der Kolbenstange (70) gleich dem Quadrat des größten Innendurchmessers ($d_{44}$) der teleskopierbaren Leitungsverbindung (44 usw.) ist.

3. Federbein nach Anspruch 2, dadurch gekennzeichnet, daß die hydraulische Verbindung zwischen der teleskopierbaren Leitungsverbindung (44 usw.) und dem Ausgleichszylinder (74) durch einen Kanal (64 bzw. 65) in dem oberen Deckel (16) der Drehverbindung (11) und einen Kanal (68, 80) in der Kolbenstange (70) des Ausgleichszylinders (74) erfolgt.

4. Federbein nach einem der Ansprüche 1 bis 3, dadurch gekennzeichnet, daß der obere Deckel (16) und das Innenteil (13) der Drehverbindung (11) über eine Drehmomentenstütze (30, 41, 42, 43) gegenüber dem Führungsgehäuse (2) rotatorisch unbeweglich gehalten sind.

5. Federbein nach Anspruch 4, dadurch gekennzeichnet, daß die Drehmomentenstütze (30 usw.) eine Zahnwellen-Verbindung (41, 42) aufweist, wobei das Zahnwellen-Profil (42) und das Zahnnaben-Profil (41) von einem mit dem Führungsgehäuse (2) und einem mit dem oberen Deckel (16) und dem Innenteil (13) der Drehverbindung (11) befestigten Teil (30 bzw. 43) gebildet wird.

6. Federbein nach einem der Ansprüche 1 bis 5, dadurch gekennzeichnet, daß die hydraulische Verbindung zwischen den teleskopierbaren Leitungsverbindungen (44 usw.) und dem von dem Führungsgehäuse (2) wegweisenden Ende der Ölzuführung (82/.../61, 63/.../83) je ein Durchgangsloch (54, 55) im oberen Deckel (16), ein Sackloch (56, 57) und einen radialen Durchlaß (58, 59) im Innenteil (13) der Drehverbindung (11), eine ringförmige Nut (21, 22) im Innenteil (13) oder im Außenteil (12), einen radialen Durchlaß (60, 62) und ein axiales Sackloch (61, 63) im Außenteil (12) der Drehverbindung (11) aufweist.

**Claims**

1. Shock-absorbing strut (1) with an outer guide housing (2) fastened to the frame of a vehicle,
a support element (3), which may slide axially and be rotated therein, to receive a wheel support with a hydraulic wheel drive unit,
at least one pressure chamber, which is formed by the guide housing (2) and the support element (3) and/or parts fixed to these, to support the frame with respect to the wheel or a wheel group,
and with an oil supply with a respective oil feed means and oil return means for the hydraulic drive unit,
characterised in that
the oil feed means (82, 46, 44, 50, 54, 56, 58, 21, 60, 61) and oil return means (63, 62, 22, 59, 57, 55, 49, 83) run through the shock-absorbing strut (1); that the oil feed means (82 etc.) and the oil return means (63 etc.) each have a telescopic, sealed pipe connection (44/48/50, .../49/...) running axially parallel to the axis (4) of the shock-absorbing strut, a pipe (44) of each pipe connection being fixed to the guide housing (28, 2); that the telescopic pipes (50/48, 50/49), which are axially movable relative to the guide housing (2), are fastened to a revolving joint (11) connected to the support element (3) so as to be axially non-displaceable; that the end of the oil feed means (82 etc.) and the oil return means (63 etc.) pointing away from the guide housing (2) is located in the outer portion (12) of the revolving joint (11), which is also connected so as to be rotationally fixed to the support element (3), and that the telescopic pipe connections (44/48/50, .../49/...) are each connected to an equalising cylinder (28, 74, 76), in which the hydraulic pressure of the hydraulic oil provided for the drive exerts a force on the revolving joint (11) which corresponds to the force exerted in the telescopic pipe connection (44 etc.), but is directed opposite thereto.

2. Shock-absorbing strut according to Claim 1, characterised in that the equalising cylinder (28, 74, 76) has a cylinder housing (74) immovably arranged with respect to the guide housing (2) and a piston (72) connected to the revolving joint (11) via its piston rod (70), wherein the cylinder chamber (78) facing the revolving joint (11) is connected hydraulically to the respectively allocated telescopic pipe connection (44 etc.), and that the difference between the square of the inside diameter ($d_{74}$) of the cylinder (74) and the square of the diameter ($d_{70}$) of the piston rod (70) is equal to the square of the largest inside diameter ($d_{44}$) of the telescopic pipe connection (44 etc.).

3. Shock-absorbing strut according to Claim 2, characterised in that the hydraulic connection between the telescopic pipe connection (44 etc.) and the equalising cylinder (74) is formed by a channel (64 or 65) arranged in the upper cover (16) of the revolving joint (11) and a channel (68, 80) in the piston rod (70) of the equalising cylinder (74).

4. Shock-absorbing strut according to one of Claims 1 to 3, characterised in that the upper cover (16) and the inner portion (13) of the revolving joint (11) are held by means of a torque support (30, 41, 42, 43) so as to be rotationally immovable relative to the guide housing (2).

5. Shock-absorbing strut according to Claim 4, characterised in that the torque support (30 etc.) has a toothed shaft connection (41, 42), wherein the toothed shaft profile (42) and toothed hub profile (41) are formed by a part (30 or 43) fastened to the guide housing (2) and a part (30 or 43) fastened to the upper cover (16) and the inside portion (13) of the revolving joint (11).

6. Shock-absorbing strut according to one of Claims 1 to 5, characterised in that the hydraulic connection between the telescopic pipe connections (44 etc.) and the end of the oil feed means (82/.../61, 63/.../83) pointing away from the guide housing (2) has a respective continuous hole (54, 55) in the upper cover (16), a blind hole (56, 57) and a radial passage (58, 59) in the inside portion (13) of the revolving joint (11), an annular groove (21, 22) in the inside portion (13) or outside portion (12), a radial passage (60, 62) and an axial blind hole (61, 63) in the outside portion (12) of the revolving joint (11).

**Revendications**

1. Jambe élastique (1) comportant

   - un carter de guidage (2) extérieur, fixé sur le châssis d'un véhicule automobile,
   - un organe d'appui (3) pouvant, dans ce carter, glisser axialement et tourner, destiné à recevoir un support de roue avec l'entraînement hydraulique de la roue,
   - au moins une enceinte sous pression, formée par le carter de guidage (2) et l'organe d'appui (3) et/ou des pièces reliées à eux, pour réaliser l'appui du châssis par rapport à la roue ou un groupe de roues, - et une alimentation en huile, comportant chaque fois une arrivée et un retour de l'huile, pour l'entraînement hydraulique, caractérisé
   - en ce que l'arrivée d'huile (82, 46, 44, 50, 54, 56, 21, 60, 61) et le retour de l'huile (63, 62, 22, 59, 57, 55, 49, 83) passent au travers de la jambe élastique (1),
   - en ce que l'arrivée d'huile (82, etc...) et le retour de l'huile (63, etc...) comportent chacun une liaison par canalisation (44/48/50/ .../49/...) rendue étanche, télescopique parallèlement à l'axe (4) de la jambe élastique, étant entendu qu'une conduite (44) de chaque liaison par canalisation est reliée de façon fixe au carter de guidage (28, 2),
   - en ce que les conduites télescopiques (50/48, 50/49), mobiles axialement par rapport au carter de guidage (2), sont fixées sur une liaison tournante (11) reliée, sans possibilité de coulissement axial, à l'organe d'appui (3),
   - en ce que l'extrémité de l'arrivée d'huile (82, etc...), s' éloignant du carter de guidage (2) et celle du retour de l'huile (63, etc...) se trouvent dans la pièce extérieure (12) de la liaison tournante (11) reliée également avec l'organe d'appui (3) sans possibilité de tourner,

- et en ce que les liaisons par canalisations (44/48/50/ .../49/...) sont chacune reliées à un cylindre d'égalisation (28, 74, 76), dans lequel la pression hydraulique de l'huile hydraulique destinée à l'entraînement exerce, sur la liaison tournante (11), une force qui correspond à la force exercée dans la liaison télescopique par canalisations (44, etc...), mais est dirigée en sens contraire.

2. Jambe élastique suivant la revendication 1, caractérisée

- en ce que le cylindre d'égalisation (28, 74, 76) présente un carter de cylindre (74) disposé immobile par rapport au carter de guidage (2) et un piston (72) qui est relié, par l'intermédiaire de sa tige de piston (70), à la liaison tournante (11), étant entendu que la chambre de cylindre (78) tournée vers la liaison tournante (11) est reliée hydrauliquement à chacune des liaisons télescopiques par canalisations (44, etc...) associées,
- et en ce que la différence entre le carré du diamètre intérieur (d74) du cylindre (74) et le carré du diamètre (d70) de la tige de piston (70) est égale au carré du plus grand diamètre intérieur (d44) de la liaison télescopique par canalisation (44, etc...).

3. Jambe élastique suivant la revendication 2, caractérisée en ce que la liaison hydraulique entre les liaisons télescopiques par canalisations (44, etc...) et le cylindre d'égalisation (74) est réalisée par un canal (respectivement 64 et 65) dans le couvercle supérieur (16) de la liaison tournante (11) et un canal (68, 80) dans la tige de piston (70) du cylindre d'égalisation (74).

4. Jambe élastique suivant l'une des' revendications 1 à 3, caractérisée en ce que le couvercle supérieur (16) et la pièce intérieure (13) de la liaison tournante (11) sont maintenus, par l'intermédiaire d'une colonne de blocage du couple de rotation (30, 41, 42, 43), immobiles en rotation par rapport au carter de guidage (2).

5. Jambe élastique suivant la revendication 4, caractérisée en ce que la colonne de blocage du couple de rotation (30, 41, 42, 43) présente une liaison par cannelures (41, 42), le profil cannelé de l'arbre (42) étant formé d'une pièce (43) fixée au couvercle supérieur (16) et à la pièce intérieure (13) de la liaison tournante (11), et le profil cannelé du moyeu (41) étant formé d'une pièce (30) fixée au carter de guidage (2).

6. Jambe élastique suivant l'une des revendications 1 à 5, caractérisée en ce que la liaison hydraulique entre les liaisons télescopiques par canalisations (44, etc...) et l'extrémité de la conduite d'arrivée d'huile (82/.../61, 63/.../83), située à l'opposé du carter de guidage (2), présentent chacune un trou traversant (54, 55) dans le couvercle supérieur (16), un trou borgne (56, 57) et un percement radial (58, 59) dans la pièce intérieure (13) de la liaison tournante (11), une rainure annulaire (21, 22) dans la pièce intérieure (13) ou dans la pièce extérieure (12), un percement radial (60, 62) et un trou borgne axial (61, 63) dans la pièce extérieure (12) de la liaison tournante (11).

FIG.1

# FIG.2

# FIG.3